# FASCICULE DE BREVET EUROPEEN

(11) **EP 3 071 825 B1**
(45) Date de publication et mention de la délivrance du brevet: **28.04.2021**
(21) Numéro de dépôt: 14809926.0
(22) Date de dépôt: 14.11.2014
(51) Int. Cl.: F02K 9/58, F02K 9/50, F02C 9/26, F02K 9/56

(54) **DISPOSITIF D'ALIMENTATION EN ERGOL DE CHAMBRE PROPULSIVE DE MOTEUR-FUSÉE**
VORRICHTUNG ZUR KRAFTSTOFFZUFUHR FÜR EINE RAKETENTRIEBWERKSKAMMER
DEVICE FOR SUPPLING PROPELLANT TO A PROPULSIVE ROCKET ENGINE CHAMBER

(30) Priorité: 22.11.2013 FR 1361508
(43) Date de publication de la demande: 28.09.2016
(73) Titulaire: ArianeGroup SAS, 75015 Paris (FR)
(72) Inventeur: CARATGE, Antoine, 92430 Marnes la Coquette (FR); ROZ, Gérard, 27510 Pressagny l'Orgueilleux (FR)
(74) Mandataire: Cabinet Beau de Loménie
(86) Numéro de dépôt international: PCT/FR2014/052909
(87) Numéro de publication internationale: WO 2015/075360

(56) Documents cités:
- FR-A- 1 276 533
- FR-A1- 2 640 579
- GB-A- 898 276
- US-A- 3 098 353
- US-A- 3 102 388
- US-A- 3 136 121
- US-A- 3 229 463
- US-A- 5 143 328
- US-A- 5 531 067
- US-B2- 6 581 882

## Description

### DOMAINE DE L'INVENTION

Le présent exposé concerne un ensemble propulsif spatial, et plus particulièrement un dispositif d'alimentation en ergol d'une chambre propulsive de moteur-fusée pour un tel ensemble propulsif.

### ARRIÈRE-PLAN

Du fait de leur accumulation au fil des missions spatiales, les débris laissés dans l'espace sont devenus une gêne sensible pour les missions actuelles. En particulier, ces débris peuvent être dangereux pour les nouveaux satellites mis en orbite autour de la Terre. C'est pourquoi il est dorénavant imposé qu'un lanceur ne génère plus de débris au moins dans les deux zones critiques dans le domaine des satellites : l'orbite basse (entre 160 km et 2000 km au-dessus de la surface de la Terre) et l'orbite géostationnaire (35786 ± 200 km au-dessus de la surface de la Terre et ±15° autour de l'équateur). Or, l'un des principaux débris d'un lanceur est l'étage supérieur du lanceur lui-même. Ainsi, après avoir mis en orbite un satellite, un étage supérieur doit pouvoir quitter la zone critique où il se trouve (le cas échéant) et ne plus y revenir. Ceci peut être est réalisé, par exemple, en impulsant à l'étage supérieur un incrément de vitesse ; cet incrément peut être réalisé soit par le moteur de l'étage, soit par un système connexe.

Lors du largage d'un satellite, l'étage supérieur est généralement en phase balistique, c'est-à-dire que le moteur-fusée de l'étage supérieur est éteint. Les réservoirs principaux d'ergol, qui alimentent le moteur-fusée en ergols, sont à une pression faible. De plus, il peut se produire des échanges thermiques entre les réservoirs principaux d'ergol, notamment si un fond commun sépare les réservoirs. Par exemple, dans le cas d'ergols cryotechniques, par exemple le couple hydrogène liquide (LH2) et oxygène liquide (LOx), l'hydrogène liquide étant à une température inférieure à celle de l'oxygène liquide, l'hydrogène se réchauffe tandis que l'oxygène se refroidit. En particulier, une partie de l'hydrogène peut se vaporiser, ce qui conduit à une augmentation de la pression dans le réservoir principal d'hydrogène. Pour compenser cette vaporisation, on effectue des dégazages, c'est-à-dire des relâchements volontaires d'hydrogène vaporisé pour faire diminuer la pression et la température dans le réservoir principal d'hydrogène liquide. Parallèlement, une partie de l'oxygène peut fortement se refroidir (voire même geler localement), ce qui est néfaste pour la stabilité de fonctionnement du moteur. Pour éviter ce phénomène, il est par exemple prévu un surplus d'oxygène liquide afin d'augmenter l'inertie thermique de l'oxygène et donc de ralentir son refroidissement. Ce surplus d'oxygène n'est pas consommé lors de la mission, et fait donc partie de la masse inerte de l'étage supérieur, au détriment direct de la charge utile du lanceur.

Par ailleurs, les ergols contenus dans les réservoirs principaux se réchauffent sous l'effet du rayonnement solaire. Toutefois, dans le cas de réservoirs principaux LOx et LH2 à fond commun, le réchauffement de l'oxygène est souvent moins important que son refroidissement dû aux transferts thermiques avec l'hydrogène.

Après le largage du satellite, l'étage supérieur doit procéder à sa désorbitation. Pour impulser un incrément de vitesse, il est connu d'utiliser le moteur-fusée de l'étage supérieur lui-même, en fonctionnement nominal avec ses pompes. Redémarrer le moteur nécessite de repressuriser et tasser les réservoirs d'ergols. On rappelle que le tassement est une opération d'accélération visant à plaquer l'ergol liquide au fond du réservoir, c'est-à-dire contre la paroi du réservoir principal et à l'endroit de la connexion de la conduite d'alimentation principale avec le réservoir principal, de sorte que le fluide circulant dans la conduite d'alimentation principale après une période de microgravité soit bien principalement de l'ergol liquide et non de l'ergol gazeux peu dense éventuellement mélangé avec un fluide neutre de pressurisation. Le tassement et la pressurisation du réservoir principal permettent de remettre en froid les conduites d'alimentation principales, les pompes et l'ensemble des conduites parcourues par les ergols entre les réservoirs principaux et la chambre propulsive. La mise en froid est généralement réalisée en faisant circuler un petit peu d'ergols dans le moteur, sous la force découlant de l'accélération fournie à l'étage. Lesdits ergols sont ensuite éjectés par des vannes de purge spécifiques. Puis le moteur redémarre en mode nominal et peut fournir l'incrément de vitesse nécessaire à la désorbitation.

Ainsi, un dispositif d'alimentation en ergol d'au moins une chambre propulsive de moteur-fusée selon l'état de la technique comprend un réservoir principal d'ergol, une conduite d'alimentation principale s'étendant entre le réservoir principal et la chambre propulsive et sur laquelle est placée une vanne d'alimentation principale.

Toutefois, un tel système présente de nombreux inconvénients. Tout d'abord, il nécessite de surdimensionner le système de pressurisation de l'étage, de sorte qu'il soit capable de repressuriser un réservoir principal de grande capacité et dont la pression initiale est très faible. Par capacité d'un réservoir, on désigne le volume que peut contenir ce réservoir. Dans le cas où la repressurisation s'effectue en injectant de l'hélium dans le réservoir principal, le système nécessite d'emporter une masse relativement importante d'hélium, dont une partie est de surcroît inconsommable (notamment dans le cas d'un stockage gazeux de l'hélium), et un système de stockage conséquent, très coûteux en masse, et qui diminue d'autant la charge utile du lanceur. Par ailleurs, le système de désorbitation décrit nécessite normalement de surcroît un kit de tassement externe dédié pour le redémarrage du moteur-fusée.

Enfin, la consommation d'ergols nécessaire à la désorbitation peut s'avérer problématique. Dans le cas du couple LH2/LOx mentionné ci-dessus, il est indispensable de consommer les ergols au plus tôt pour limiter d'une part l'évaporation de l'hydrogène (puisque l'hydrogène gazeux ne pourra plus être utilisé), et d'autre part le refroidissement de l'oxygène (puisque le surplus d'oxygène prévu pour limiter le refroidissement ne sera pas consommé). Ces raisons conduisent à effectuer la manœuvre de désorbitation aussi tôt que possible. Or, d'un point de vue balistique, il serait souvent préférable d'attendre plusieurs heures avant d'effectuer la manœuvre de désorbitation afin d'augmenter grandement son efficacité, mais ceci n'est pas réalisable en raison des transferts thermiques déjà mentionnés. Ainsi, la manœuvre de désorbitation, réalisée trop tôt d'un point de vue énergétique, se révèle coûteuse en ergols, d'où une pénalité en masse pour la charge utile du lanceur.

Il existe donc un besoin pour un nouveau type de dispositif d'alimentation en ergol d'un moteur-fusée.

### PRÉSENTATION DE L'INVENTION

Le présent exposé concerne un dispositif d'alimentation en ergol, tel que revendiqué dans la revendication 1, d'au moins une chambre propulsive de moteur-fusée, comprenant un réservoir principal d'ergol, une conduite d'alimentation principale s'étendant entre le réservoir principal et la chambre propulsive et sur laquelle est placée une vanne d'alimentation principale, le dispositif d'alimentation étant caractérisé en ce qu'il comprend en outre un réservoir auxiliaire dudit ergol et une conduite d'alimentation auxiliaire munie d'une vanne d'alimentation auxiliaire, reliant le réservoir auxiliaire à la conduite d'alimentation principale en aval de la vanne d'alimentation principale.

Dans le présent exposé, sauf précision contraire, les termes amont et aval sont utilisés en référence au sens normal de circulation de l'ergol, notamment des réservoirs vers la chambre propulsive. Ainsi, dire que la conduite d'alimentation auxiliaire relie le réservoir auxiliaire à la conduite d'alimentation principale en aval de la vanne d'alimentation principale signifie que l'ergol provenant du réservoir auxiliaire peut circuler vers la chambre propulsive via la conduite d'alimentation auxiliaire puis la conduite d'alimentation principale sans passer par la vanne d'alimentation principale.

Le réservoir auxiliaire permet donc d'alimenter la chambre propulsive en ledit ergol indépendamment du réservoir principal. Cette alimentation peut résulter en un incrément de vitesse. Ainsi, la vanne d'alimentation auxiliaire pourra rester fermée jusqu'à l'utilisation du réservoir auxiliaire, si bien que le réservoir auxiliaire sera, au moment de son utilisation, toujours à son niveau de remplissage initial et sous une pression proche de sa pression de remplissage. La simple ouverture de la vanne d'alimentation auxiliaire permet donc une circulation de l'ergol contenu dans le réservoir auxiliaire vers la chambre propulsive. Dans les cas où elle s'avérerait utile, la pressurisation du réservoir auxiliaire est simple et peu consommatrice en fluide de pressurisation dans la mesure où le réservoir auxiliaire est à son niveau de remplissage initial en début d'utilisation. Ainsi, l'alimentation du moteur-fusée en ergol à partir du réservoir auxiliaire ne nécessite pas de prévoir un surdimensionnement du système de pressurisation du dispositif d'alimentation.

Le réservoir auxiliaire permet de faire fonctionner le moteur-fusée en mode à faible intensité (ou « idle mode » en anglais), c'est-à-dire dans un mode où les pompes alimentant en ergol la chambre propulsive sont arrêtées et la circulation de l'ergol vers la chambre propulsive s'effectue principalement sous l'effet d'une différence de pression entre le réservoir auxiliaire et la chambre propulsive. Cette différence de pression peut être maintenue en pressurisant le réservoir auxiliaire au fur et à mesure que de l'ergol quitte le réservoir auxiliaire pour rejoindre la chambre propulsive. Ainsi, en mode à faible intensité, il n'est pas nécessaire de remettre en marche les pompes, donc de prévoir une phase de mise en froid très stricte. Une mise en froid dégradée, c'est-à-dire avec un relâchement des températures cibles, est suffisante, et une absence de mise en froid pourrait être envisagée. Ceci permet d'économiser de l'ergol, du temps et de l'énergie.

En outre, il n'est pas nécessaire non plus d'effectuer un tassement avant l'alimentation de la chambre propulsive en ergol provenant du réservoir auxiliaire. En effet, le réservoir auxiliaire étant rempli principalement d'ergol à l'état liquide, aucune opération n'est nécessaire pour s'assurer que le fluide parcourant la conduite d'alimentation auxiliaire vers la chambre propulsive est principalement de l'ergol à l'état liquide.

Dans la présente demande, l'état liquide et l'état gazeux sont à comprendre selon une acception large englobant l'état supercritique. Par extension, un fluide à l'état supercritique sera dit liquide s'il est relativement dense et gazeux s'il est relativement peu dense. De même, les termes de vaporisation et condensation peuvent s'appliquer à un fluide supercritique pour désigner respectivement une diminution et une augmentation de sa densité, même s'il n'y a pas de changement d'état en soi. Enfin, la vaporisation (resp. la condensation) peut désigner un passage de l'état liquide à l'état gazeux (resp. de l'état gazeux à l'état liquide) strictement dits via un passage par l'état supercritique.

Le dispositif d'alimentation selon la présente invention permet donc d'alimenter simplement en ergol la chambre propulsive à tout instant, et en particulier de fournir un incrément de vitesse de manière simple et économique sans surdimensionner le système de pressurisation. L'ergol contenu dans le réservoir auxiliaire étant confiné jusqu'à ce qu'il soit utilisé, il n'est pas nécessaire de prévoir de surplus d'ergol qui serait perdu (par exemple de l'hydrogène dégazé ou de l'oxygène en surplus pour l'inertie thermique). Notamment pour ces raisons et malgré la masse du réservoir auxiliaire, le dispositif d'alimentation selon la présente invention permet de réaliser un allègement conséquent d'un ensemble propulsif.

Au lieu d'être utilisé pour effectuer une désorbitation, l'incrément de vitesse fourni par le réservoir auxiliaire peut servir à communiquer au dispositif d'alimentation une accélération qui plaque, par inertie, l'ergol liquide au fond du réservoir principal, à l'endroit de la connexion du réservoir principal avec la conduite d'alimentation principale. De cette façon, le réservoir auxiliaire peut former un kit de tassement pour le réservoir principal, alors que le réservoir auxiliaire lui-même ne nécessite aucun tassement pour son fonctionnement. D'autres applications du dispositif d'alimentation selon l'invention sont bien entendu possibles ; par exemple, le réservoir auxiliaire peut fournir un incrément de vitesse pour réaliser un changement d'orbite, notamment pour passer d'une orbite elliptique à une orbite circulaire (opération de circularisation).

En outre, il est bien entendu possible de prévoir plusieurs réservoirs auxiliaires associés chacun à une conduite d'alimentation auxiliaire munie d'une vanne d'alimentation auxiliaire, chaque réservoir auxiliaire étant dédié à une utilisation particulière.

Dans certains modes de réalisation, le réservoir auxiliaire est situé à l'intérieur du réservoir principal. De cette façon, le réservoir auxiliaire est protégé du rayonnement solaire par l'enveloppe externe du réservoir principal. Si l'on ne prévoit pas de protection thermique sur le réservoir auxiliaire, alors l'ergol contenu dans le réservoir principal peut assurer le maintien à température de l'ergol contenu dans le réservoir auxiliaire. Le réservoir auxiliaire peut être accroché à l'intérieur du réservoir principal, notamment avec des cales thermiquement isolantes pour limiter les échanges thermiques par conduction avec la paroi du réservoir principal. Enfin, du point de vue de la sûreté, le positionnement du réservoir auxiliaire à l'intérieur du réservoir principal permet de limiter sensiblement les conséquences d'une fuite éventuelle du réservoir auxiliaire, dans la mesure où une fuite n'aurait alors pas d'autre conséquence que de rendre le réservoir auxiliaire inopérant, sans risque de fuite d'ergol en dehors du réservoir principal.

Dans certains modes de réalisation, le réservoir auxiliaire est connecté par une conduite de remplissage à la conduite d'alimentation principale en amont de la vanne d'alimentation principale, et la conduite de remplissage comporte une vanne de remplissage. Dans de tels modes de réalisation, le remplissage initial du réservoir auxiliaire est particulièrement aisé. La vanne d'alimentation principale étant fermée, l'ergol avec lequel on remplit le réservoir principal circule dans la conduite d'alimentation principale, du réservoir principal à la vanne d'alimentation principale. Il suffit alors d'ouvrir la vanne de remplissage pour que l'ergol pénètre dans la conduite de remplissage et remplisse le réservoir auxiliaire de façon à égaliser les pressions dans le réservoir principal et dans le réservoir auxiliaire. Une fois le remplissage du réservoir auxiliaire terminé, la vanne de remplissage peut être fermée.

Dans certains modes de réalisation, le dispositif d'alimentation comprend en outre une conduite de pressurisation du réservoir auxiliaire reliant le réservoir auxiliaire à une conduite de pressurisation principale. La conduite de pressurisation principale peut être, par exemple, une conduite de pressurisation du réservoir principal. La conduite de pressurisation auxiliaire permet d'envoyer un débit de fluide de pressurisation pour faire circuler le contenu du réservoir auxiliaire dans la conduite d'alimentation auxiliaire en mode à faible intensité. Le fluide de pressurisation peut être de l'ergol vaporisé (on parle alors de pressurisation autogène) ou un gaz neutre, par exemple de l'hélium (pour tous les ergols) ou de l'azote (pour tous les ergols, sauf le LH2). Par ailleurs, si la pression initiale du réservoir auxiliaire est prévue suffisamment élevée (par exemple au-dessus de un bar, notamment au-dessus de cinq bars, notamment au-dessus de dix bars), une bonne circulation d'ergol dans la conduite d'alimentation auxiliaire peut être obtenue sans avoir à pressuriser le réservoir auxiliaire.

Dans certains modes de réalisation, la capacité du réservoir auxiliaire est inférieure à la capacité du réservoir principal. Ainsi, le cas échéant, il est possible de loger le réservoir auxiliaire à l'intérieur du réservoir principal sans prévoir d'accroissement sensible de la taille de ce dernier. En outre, sa pressurisation consomme peu de fluide de pressurisation. En particulier, dans certains modes de réalisation, la capacité du réservoir auxiliaire est inférieure à 5 % de la capacité du réservoir principal. Ainsi, le réservoir auxiliaire a une capacité suffisante pour les applications évoquées précédemment et il est dimensionné au plus juste pour optimiser la masse du dispositif d'alimentation.

Dans certains modes de réalisation, le dispositif d'alimentation alimente la chambre propulsive en un ergol cryotechnique.

Le présent exposé concerne également un ensemble propulsif comprenant au moins une chambre propulsive de moteur fusée et un dispositif d'alimentation tel que précédemment décrit pour alimenter en au moins un ergol cette chambre propulsive.

Le présent exposé concerné également un procédé d'alimentation d'au moins une chambre propulsive de moteur-fusée en au moins un ergol, caractérisé en ce qu'il comprend :
- la fermeture d'une vanne d'alimentation principale pour arrêter la circulation d'ergol dans une conduite d'alimentation principale reliant un réservoir principal d'ergol à la chambre propulsive ;
- l'ouverture d'une vanne d'alimentation auxiliaire pour permettre la circulation d'ergol depuis un réservoir auxiliaire vers la chambre propulsive, le réservoir auxiliaire étant connecté à la conduite d'alimentation principale en aval de la vanne d'alimentation principale à travers une conduite d'alimentation d'auxiliaire munie de ladite vanne d'alimentation auxiliaire.

Un tel procédé d'alimentation possède de nombreuses applications, comme précédemment exposé. Il permet en particulier de réaliser une désorbitation d'un étage de lanceur spatial ou un tassement du réservoir principal tout en surmontant les inconvénients des procédés d'alimentation utilisant les dispositifs de l'état de la technique.

Dans certains modes de réalisation, le procédé comprend en outre la pressurisation du réservoir auxiliaire avant et/ou après l'ouverture de la vanne d'alimentation auxiliaire.

Cette pressurisation peut être utile si la pression du réservoir auxiliaire n'est pas suffisamment élevée au départ et pendant toute la durée du fonctionnement du moteur en mode à faible intensité.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente un ensemble propulsif comprenant un dispositif d'alimentation selon un premier mode de réalisation ;
- la figure 2 représente un ensemble propulsif comprenant un dispositif d'alimentation selon un deuxième mode de réalisation ;
- la figure 3 représente un ensemble propulsif comprenant un dispositif d'alimentation selon un troisième mode de réalisation.

### DESCRIPTION DÉTAILLÉE DE L'INVENTION

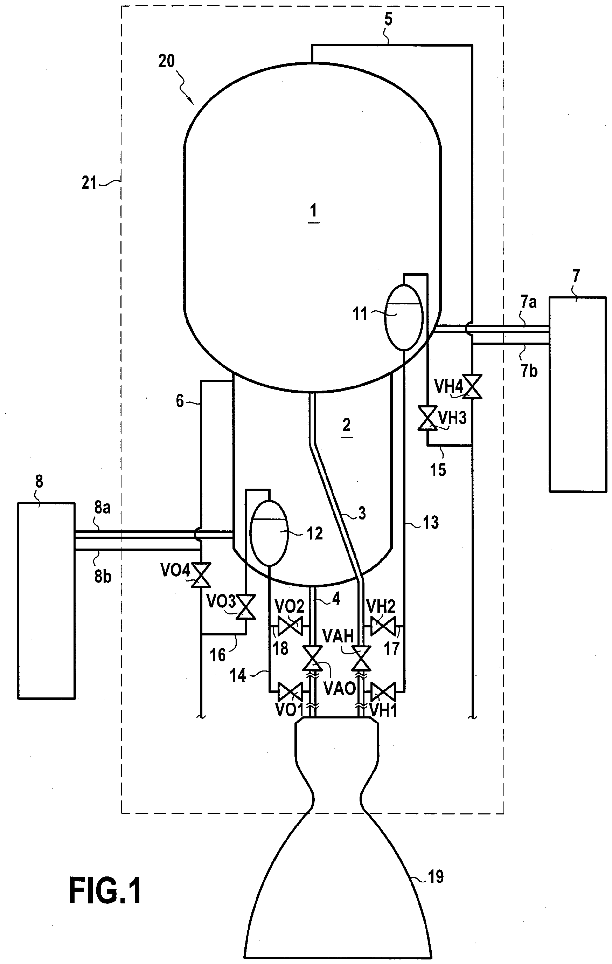

Plus précisément, la figure 1 représente un ensemble propulsif 21 comprenant une chambre propulsive 19 et un dispositif d'alimentation 20 pour alimenter la chambre propulsive 19 en deux ergols. En l'espèce, l'ensemble propulsif 21 peut être un étage supérieur de lanceur spatial, mais d'autres types d'ensembles propulsifs sont envisageables. Dans le mode de réalisation présenté, les ergols sont des ergols cryotechniques, et plus particulièrement de l'hydrogène liquide (LH2) et de l'oxygène liquide (LOx). En variante, du méthane liquide LCH4 pourrait être utilisé à la place de l'hydrogène liquide. Le dispositif d'alimentation présenté ci-après peut bien sûr alimenter la chambre propulsive en un nombre quelconque d'ergols, sans forcément inclure l'hydrogène liquide ou l'oxygène liquide.

Le dispositif d'alimentation 20 comprend un réservoir principal d'hydrogène 1, une première conduite d'alimentation principale 3 s'étendant entre le réservoir principal d'hydrogène et la chambre propulsive 19, et une première vanne d'alimentation principale VAH placée sur la première conduite d'alimentation principale 3. Une première conduite de pressurisation principale 5 est connectée au réservoir principal d'hydrogène 1 pour la pressurisation du réservoir principal d'hydrogène. La première conduite de pressurisation principale 5 est munie d'une première vanne de pressurisation principale VH4. Par ailleurs, lorsque l'ensemble propulsif 21 est au sol, avant le lancement, le réservoir principal d'hydrogène 1 peut être connecté à une première alimentation externe (par exemple une plaque à clapets) 7 pour l'alimenter en ergol et le pressuriser. Dans le mode de réalisation décrit, l'alimentation en ergol et la pressurisation du réservoir principal d'hydrogène 1 s'effectuent respectivement à partir de la plaque à clapets 7 par deux conduites 7a, 7b. Le fluide de pressurisation peut être un gaz neutre avec l'hydrogène, notamment ayant une plus faible température de liquéfaction à pression ambiante que l'hydrogène, par exemple l'hélium. Dans un autre mode de réalisation, il serait possible de n'avoir qu'une seule conduite 7a pour l'alimentation en hydrogène du réservoir principal d'hydrogène 1, la pressurisation étant assurée par la vaporisation d'une fraction de l'hydrogène fourni audit réservoir 1.

Le dispositif d'alimentation 20 comprend également un réservoir principal d'oxygène 2, une deuxième conduite d'alimentation principale 4 s'étendant entre le réservoir principal d'oxygène et la chambre propulsive 19, et une deuxième vanne d'alimentation principale VAO placée sur la deuxième conduite d'alimentation principale 4. Une deuxième conduite de pressurisation principale 6 est connectée au réservoir principal d'oxygène 2 pour la pressurisation du réservoir principal d'oxygène. La deuxième conduite de pressurisation principale 6 est munie d'une deuxième vanne de pressurisation principale VO4. Par ailleurs, lorsque l'ensemble propulsif 21 est au sol, avant le lancement, le réservoir principal d'oxygène 2 peut être connecté à une deuxième alimentation externe (par exemple une plaque à clapets) 8 pour l'alimenter en ergol et le pressuriser. Dans le mode de réalisation décrit, l'alimentation en ergol et la pressurisation du réservoir principal d'oxygène 2 s'effectuent respectivement à partir de la plaque à clapets 8 par deux conduites 8a, 8b. Le fluide de pressurisation peut être un gaz neutre avec l'oxygène, notamment ayant une plus faible température de liquéfaction à pression ambiante que l'oxygène, par exemple l'azote ou l'hélium. Dans un autre mode de réalisation, il serait possible de n'avoir qu'une seule conduite 8a pour l'alimentation en oxygène du réservoir principal d'oxygène 2, la pressurisation étant assurée par la vaporisation d'une fraction de l'oxygène fourni audit réservoir 2.

Dans le mode de réalisation présenté, les réservoirs principaux d'hydrogène 1 et d'oxygène 2 ont un fond commun, ce qui entraîne des échanges thermiques entre les deux ergols, en l'occurrence le réchauffement de l'hydrogène et le refroidissement de l'oxygène. Dans le cas de réservoirs principaux séparés, de tels échanges thermiques deviennent négligeables et les deux ergols se réchauffent en raison du rayonnement solaire. L'invention concerne les deux types de dispositifs d'alimentation ; l'adaptation du dispositif d'alimentation présenté au cas où les réservoirs principaux sont séparés étant à la portée de l'homme du métier, elle ne sera plus détaillée par la suite.

Comme illustré sur la figure 1, le dispositif d'alimentation 20 comprend un réservoir auxiliaire d'hydrogène 11 de capacité inférieure à celle du réservoir principal d'hydrogène 1. Le réservoir auxiliaire d'hydrogène 11 est placé à l'intérieur du réservoir principal d'hydrogène 1. Le dispositif d'alimentation comprend en outre une première conduite d'alimentation auxiliaire 13 reliant le réservoir auxiliaire d'hydrogène 11 à la première conduite d'alimentation principale 3 en aval de la première vanne d'alimentation principale VAH, et une première vanne d'alimentation auxiliaire VH1 placée sur la première conduite d'alimentation auxiliaire 13.

Certains éléments connus du dispositif d'alimentation 20 ne sont pas représentés, en particulier, comme indiqué sur la figure 1, des éléments se trouvant sur la première conduite d'alimentation principale 3, entre la première vanne d'alimentation principale VAH et la chambre propulsive 19. A cet endroit, la première conduite d'alimentation principale 3 peut notamment traverser la ou les pompes permettant d'alimenter la chambre propulsive 19 en hydrogène provenant du réservoir principal d'hydrogène 1. La première conduite d'alimentation auxiliaire 13 peut relier le réservoir auxiliaire d'hydrogène 11 à la première conduite d'alimentation principale 3 en amont ou en aval de ladite pompe. Plus généralement, la première conduite d'alimentation auxiliaire 13 peut relier le réservoir auxiliaire d'hydrogène 11 à la première conduite d'alimentation principale 3 en plusieurs endroits de ladite première conduite principale 3, pourvu que cela reste en aval de la première vanne d'alimentation principale VAH.

Une première conduite de pressurisation auxiliaire 15 relie le réservoir auxiliaire d'hydrogène 11 à la première conduite de pressurisation principale 5, en amont de la première vanne de pressurisation principale VH4, pour la pressurisation du réservoir auxiliaire d'hydrogène 11. La première conduite de pressurisation auxiliaire est munie d'une première vanne de pressurisation auxiliaire VH3. Le réservoir auxiliaire d'hydrogène 11 peut donc être pressurisé directement à travers la première conduite de pressurisation principale 5 puis la première conduite de pressurisation auxiliaire 15, sans nécessiter de source supplémentaire de fluide de pressurisation.

En outre, une première conduite de remplissage 17 s'étend entre la première conduite d'alimentation principale 3, en amont de la première vanne d'alimentation principale VAH, et le réservoir auxiliaire d'hydrogène 11. La première conduite de remplissage est munie d'une première vanne de remplissage VH2. Dans le mode de réalisation représenté, la première conduite d'alimentation auxiliaire 13 et la première conduite de remplissage 17 ont un tronçon commun.

Optionnellement, une ou plusieurs vannes parmi la première vanne d'alimentation auxiliaire VH1, la première vanne de remplissage VH2, la première vanne de pressurisation auxiliaire VH3, sont placées aussi près que possible du réservoir auxiliaire d'hydrogène 11 afin de minimiser les pertes thermiques.

De manière analogue, comme illustré sur la figure 1, le dispositif d'alimentation 20 comprend un réservoir auxiliaire d'oxygène 12 de capacité inférieure à celles du réservoir principal d'oxygène 2. Le réservoir auxiliaire d'oxygène 12 est placé à l'intérieur du réservoir principal d'oxygène 2. Le dispositif d'alimentation comprend en outre une deuxième conduite d'alimentation auxiliaire 14 reliant le réservoir auxiliaire d'oxygène 12 à la deuxième conduite d'alimentation principale 4 en aval de la deuxième vanne d'alimentation principale VAO, et une deuxième vanne d'alimentation auxiliaire VO1 placée sur la deuxième conduite d'alimentation auxiliaire 14.

Certains éléments connus du dispositif d'alimentation 20 ne sont pas représentés, en particulier, comme indiqué sur la figure 1, des éléments se trouvant sur la deuxième conduite d'alimentation principale 4, entre la deuxième vanne d'alimentation principale VAO et la chambre propulsive 19. A cet endroit, la deuxième conduite d'alimentation principale 4 peut notamment traverser la ou les pompes permettant d'alimenter la chambre propulsive 19 en oxygène provenant du réservoir principal d'oxygène 2. La deuxième conduite d'alimentation auxiliaire 14 peut relier le réservoir auxiliaire d'oxygène 12 à la deuxième conduite d'alimentation principale 4 en amont ou en aval de ladite pompe. Plus généralement, la deuxième conduite d'alimentation auxiliaire 14 peut relier le réservoir auxiliaire d'hydrogène 12 à la deuxième conduite d'alimentation principale 4 en plusieurs endroits de ladite deuxième conduite principale 4, pourvu que cela reste en aval de la deuxième vanne d'alimentation principale VAO.

Une deuxième conduite de pressurisation auxiliaire 16 relie le réservoir auxiliaire d'oxygène 12 à la deuxième conduite de pressurisation principale 6, en amont de la deuxième vanne de pressurisation principale V04, pour la pressurisation du réservoir auxiliaire d'oxygène 12. La deuxième conduite de pressurisation auxiliaire est munie d'une deuxième vanne de pressurisation auxiliaire VO3. Le réservoir auxiliaire d'oxygène 12 peut donc être pressurisé directement à travers la deuxième conduite de pressurisation principale 6 puis la première conduite de pressurisation auxiliaire 16, sans nécessiter de source supplémentaire de fluide de pressurisation.

En outre, une deuxième conduite de remplissage 18 s'étend entre la deuxième conduite d'alimentation principale 4, en amont de la deuxième vanne d'alimentation principale VAO, et le réservoir auxiliaire d'oxygène 12. La deuxième conduite de remplissage est munie d'une deuxième vanne de remplissage V02. Le réservoir auxiliaire d'oxygène peut donc être pressurisé directement par le système de pressurisation de l'étage supérieur, sans nécessiter de système de pressurisation auxiliaire. Dans le mode de réalisation représenté, la deuxième conduite d'alimentation auxiliaire 14 et la deuxième conduite de remplissage 18 ont un tronçon commun.

Optionnellement, une ou plusieurs vannes parmi la deuxième vanne d'alimentation auxiliaire VO1, la deuxième vanne de remplissage V02, la deuxième vanne de pressurisation auxiliaire V03, sont placées aussi près que possible du réservoir auxiliaire d'oxygène 12 afin de minimiser les pertes thermiques.

Dans le présent mode de réalisation, les réservoirs auxiliaires 11, 12 sont de petite taille et de forme sensiblement cylindrique, de manière à pouvoir être insérés aisément dans les réservoirs principaux 1, 2. Par ailleurs, les réservoirs auxiliaires 11, 12 ne disposent d'aucune protection thermique de façon à être maintenus en température par les ergols ballotant dans les réservoirs principaux 1, 2.

Le fonctionnement du dispositif d'alimentation selon ce mode de réalisation va maintenant être décrit en suivant les grandes étapes d'une mission de mise en orbite. La description qui suit ne détaillera que le fonctionnement du dispositif d'alimentation de la chambre propulsive 19 en hydrogène. Sauf mention contraire, toutes les explications concernant les éléments relatifs à l'hydrogène peuvent s'appliquer également aux éléments correspondants relatifs à l'oxygène. Des variantes peuvent bien sûr être prévues selon les objectifs visés par l'homme du métier.

Au sol, avant le démarrage de l'ensemble propulsif, le remplissage du dispositif d'alimentation 20 s'effectue de la façon suivante : les vannes VH1, VH2 et VAH sont fermées tandis que les vannes VH3 et VH4 sont ouvertes. La plaque à clapets 7 est reliée au réservoir principal d'hydrogène 1 et alimente le réservoir principal d'hydrogène 1 en hydrogène liquide. Ainsi, l'hydrogène liquide pénètre dans le réservoir principal d'hydrogène puis dans la première conduite d'alimentation principale 3 jusqu'à la première vanne d'alimentation principale VAH, qui est fermée. Ainsi, l'hydrogène contenu dans le réservoir principal d'hydrogène 1 peut refroidir de l'extérieur le réservoir auxiliaire d'hydrogène 11. Ensuite, lorsque le réservoir auxiliaire d'hydrogène est suffisamment froid, ou lorsque l'hydrogène dans le réservoir 1 atteint un certain niveau, la première vanne de remplissage VH2 est ouverte et l'hydrogène peut poursuivre son chemin par la première conduite de remplissage 17 jusqu'au réservoir auxiliaire d'hydrogène 11. De cette façon, le réservoir auxiliaire d'hydrogène 11 se remplit par simple égalisation des pressions dans ces deux réservoirs 1, 11. Le fait que les vannes de pressurisation principale VH3 et auxiliaire VH4 soient ouvertes permet le dégazement des vapeurs d'hydrogène et donc de contrôler la pression dans ces deux réservoirs 1, 11. Un détecteur de niveau (non représenté) dans le réservoir auxiliaire d'hydrogène 11 permet d'arrêter le remplissage du réservoir auxiliaire d'hydrogène 11, par exemple en fermant la première vanne de remplissage VH2, lorsque le niveau d'hydrogène dans ce réservoir atteint un niveau souhaité.

Il est préférable de ne pas remplir le réservoir auxiliaire d'hydrogène 11 complètement afin de laisser un volume de fluide de pressurisation (par exemple de l'hélium, de l'azote ou de l'hydrogène vaporisé) qui servira à accommoder les variations de pression en cas de changement de température de l'hydrogène liquide. Ce volume peut être de l'ordre de 5% de la capacité du réservoir auxiliaire d'hydrogène 11. De préférence, l'hydrogène ayant tendance à se vaporiser à cause des échanges thermiques avec l'oxygène plus chaud et les radiations solaires, ledit volume de fluide de pressurisation est prévu en sous-pression pour le réservoir auxiliaire d'hydrogène 11; inversement, dans le cas de réservoirs principaux à fond commun, l'oxygène ayant tendance à se liquéfier à cause des échanges thermiques avec l'hydrogène plus froid, le volume de fluide de pressurisation dans le réservoir auxiliaire d'oxygène 12 pourra être prévu en surpression.

Le réservoir auxiliaire d'hydrogène 11 étant presque entièrement rempli, il n'est pas forcément nécessaire de prévoir de dispositif antiballottement à l'intérieur de celui-ci, ce qui représente dans ce cas une économie en termes de masse embarquée. Une fois le remplissage du réservoir auxiliaire d'hydrogène 11 terminé, le remplissage du réservoir principal d'hydrogène 1 se poursuit éventuellement, selon des modalités bien connues de l'homme du métier.

Pendant le fonctionnement en régime nominal du moteur-fusée, les premières vannes auxiliaires VH1, VH2 et VH3 sont fermées, de sorte que le moteur-fusée fonctionne comme s'il n'y avait pas de réservoir auxiliaire d'hydrogène. Ce fonctionnement est bien connu de l'homme du métier et ne sera donc pas détaillé ici.

Pour le largage de la charge utile, le moteur-fusée est éteint et l'ensemble propulsif 21 est en phase balistique. Les premières vannes auxiliaires VH1, VH2, VH3 ainsi que la première vanne d'alimentation principale VAH sont fermées, tandis que la première vanne de pressurisation principale VH4 est ouverte. Ainsi, ce régime fonctionne également comme s'il n'y avait pas de réservoir auxiliaire d'hydrogène.

Pendant la phase balistique, le réservoir principal d'hydrogène 1 est peu rempli, la plupart de l'hydrogène qu'il contenait ayant été consommé. De même, le réservoir principal d'oxygène 2 est peu rempli. Par conséquent, il y a très peu d'échanges thermiques entre le réservoir auxiliaire d'hydrogène 11 et le réservoir auxiliaire d'oxygène 12, si bien que chacun des ergols contenus dans ces réservoirs auxiliaires 11, 12 a une température relativement stable. Par conséquent, le réchauffement et la vaporisation de l'hydrogène contenu dans le réservoir auxiliaire d'hydrogène 11 sont très limités, et le refroidissement de l'oxygène contenu dans le réservoir auxiliaire d'oxygène 12 est également très limité.

Le besoin de prévoir, dans le dimensionnement des réservoirs auxiliaires 11, 12, une masse d'ergol qui sera dégazée (pour l'hydrogène) ou servant à l'inertie thermique (pour l'oxygène) est donc fortement diminué, voire supprimé.

Parallèlement, les ergols qui restent dans les réservoirs principaux 1, 2 n'ont, à partir de la phase balistique, plus d'utilité du point de vue de la propulsion. En particulier, les réservoirs principaux 1, 2 n'étant pas utilisés pour la manœuvre de désorbitation, il n'est pas nécessaire de prévoir des réserves d'hydrogène ou d'oxygène dans ces réservoirs. Au contraire, les réservoirs principaux 1, 2 pourraient éventuellement être vidés pour diminuer encore davantage les échanges thermiques mentionnés ci-dessus entre les réservoirs auxiliaires 11, 12.

Une fois la charge utile mise en orbite, l'ensemble propulsif 21 doit effectuer une désorbitation pour ne pas devenir un débris orbital. Cette étape est mise en œuvre en faisant fonctionner le moteur-fusée en mode à faible intensité et en se passant de tuyères supplémentaires dédiées. Dans ce mode à faible intensité selon le mode de réalisation décrit, la première vanne d'alimentation principale VAH et la première vanne de pressurisation principale VH4 sont fermées, ainsi que la première vanne de remplissage VH2. Par conséquent, le réservoir principal d'hydrogène 1 est isolé du reste du dispositif d'alimentation 20. La première vanne d'alimentation auxiliaire VH1 et la première vanne de pressurisation auxiliaire VH3 sont quant à elles ouvertes.

La première vanne de pressurisation principale VH4 étant fermée pour permettre la régulation de la pression dans le premier réservoir auxiliaire 11, la pression dans le réservoir principal d'hydrogène 1 n'est plus contrôlée. Or, l'hydrogène restant peut en partie se vaporiser. Ce problème peut être résolu par exemple en prévoyant sur le réservoir principal d'hydrogène 1 un dispositif anti surpression ou en vidant le réservoir principal d'hydrogène 1 avant le passage en mode à faible intensité.

L'hydrogène liquide contenu dans le réservoir auxiliaire d'hydrogène 11 s'écoule vers la chambre propulsive 19 via la première conduite d'alimentation auxiliaire 13 principalement sous l'effet de la différence de pression entre le réservoir auxiliaire d'hydrogène 11 et la chambre propulsive 19. Dans le présent mode de réalisation, en effet, aucune pompe n'est prévue pour faire circuler l'hydrogène du réservoir auxiliaire d'hydrogène 11 à la chambre propulsive du moteur-fusée 19. Si la différence de pression n'est pas assez importante, on peut l'augmenter en pressurisant le réservoir auxiliaire d'hydrogène 11 via la première conduite de pressurisation auxiliaire 15.

La pressurisation du réservoir auxiliaire d'hydrogène 11, si elle est nécessaire, consomme beaucoup moins de fluide de pressurisation que la pressurisation du réservoir principal d'hydrogène 1 qui est beaucoup plus grand et, à ce stade de la mission, presque vide tandis que le réservoir auxiliaire d'hydrogène 11 est petit et presque plein au début du fonctionnement du moteur en mode à faible intensité. L'utilisation d'un réservoir auxiliaire d'hydrogène permet un gain de masse conséquent en raison de l'économie de fluide de pressurisation (par exemple de l'hélium) et des réservoirs et lignes associées, et de l'économie d'ergols non consommables dans les réservoirs principaux (ergols évaporés ou résiduels). En contrepartie, la masse sèche du réservoir auxiliaire d'hydrogène 11 est moindre. A titre d'exemple, lorsqu'un dispositif d'alimentation selon l'invention est utilisé pour chaque ergol, comme c'est le cas pour l'hydrogène et l'oxygène dans le mode de réalisation représenté sur la figure 1, le gain net de masse obtenu est de l'ordre de plusieurs centaines de kilogrammes. Ainsi, pour le dispositif d'alimentation selon l'invention, la masse sèche supplémentaire destinée à assurer une capacité de désorbitation à l'ensemble propulsif augmente faiblement par rapport à un dispositif d'alimentation ne prévoyant pas de désorbitation, et le gain de masse est conséquent par rapport à un dispositif d'alimentation prévoyant une désorbitation selon l'une des techniques connues dans l'art antérieur.

L'alimentation en ergols de la chambre propulsive 19 en mode à faible intensité permet d'impulser un incrément de vitesse. En mode à faible intensité, la poussée est environ cent fois plus faible que la poussée nominale du moteur. L'incrément de vitesse obtenu en utilisant le moteur en mode à faible intensité pendant quelques dizaines ou centaines de secondes suffit toutefois à désorbiter l'ensemble propulsif 21. En outre, bien que le dispositif d'alimentation 20 ait été présenté dans une application de désorbitation, sa structure est générique et permet d'autres applications en mode à faible intensité, comme par exemple le tassement des réservoirs principaux 1, 2 ou la circularisation de l'orbite suivie.

Une autre application est également possible, qui consiste à utiliser les réservoirs auxiliaires 11, 12 lors d'un fonctionnement en mode à faible intensité pour augmenter la précision de largage de la charge utile (un satellite par exemple). En effet, la faible poussée liée au mode à faible intensité permettrait, après un fonctionnement en mode nominal, de parfaire la trajectoire de l'ensemble propulsif 21 encore assemblé avec la charge utile. Grâce au dispositif d'alimentation 20, ceci peut être réalisé sans repressuriser les réservoirs principaux 1, 2.

Par ailleurs, compte tenu de la petite taille des réservoirs auxiliaires 11, 12, il est possible d'augmenter la pression de pressurisation des réservoirs auxiliaires 11, 12 à cinq bars voire dix bars ou plus, pour que la pression des ergols injectés dans la chambre propulsive 19 soit plus importante, sans que cela ne soit trop pénalisant pour la masse du dispositif d'alimentation 20. Les deux avantages d'une telle variante sont d'une part la possibilité d'injecter les ergols à haute pression dans la chambre propulsive 19 en mode à faible intensité bien que les pompes soient arrêtées, ce qui résulte en une diminution de la consommation du moteur, et donc à une diminution de la masse d'ergols nécessaire pour assurer la désorbitation de l'ensemble propulsif 21 incrément de vitesse plus élevé pour la désorbitation ; et d'autre part la possibilité de limiter, voire de se passer complètement, de l'alimentation des réservoirs auxiliaires 11, 12 en fluide de pressurisation pendant leur vidange vers la chambre propulsive 19. On parle dans ce cas-là de fonctionnement en alimentation par détente (mode appelé « Blow down »).

Si l'on considère maintenant la manœuvre de désorbitation, l'instant auquel est impulsé l'incrément de vitesse résulte d'un compromis : d'une part, plus l'instant de désorbitation est retardé (plus l'étage est proche de l'apogée de son orbite), plus l'incrément de vitesse à fournir est faible ; d'autre part, plus l'instant de désorbitation est retardé, plus il y aura eu d'échanges thermiques entre les ergols et moins il y aura d'ergols utilisables dans les réservoirs fournissant lesdits ergols. La minimisation des échanges thermiques affectant les réservoirs auxiliaires 11, 12 (n'étant ni exposés au soleil, ni en contact l'un avec l'autre), permet donc d'attendre plus longtemps avant d'impulser l'incrément de vitesse, donc d'impulser un incrément de vitesse plus faible. Ceci permet en définitive de dimensionner les réservoirs auxiliaires 11, 12 encore plus petits.

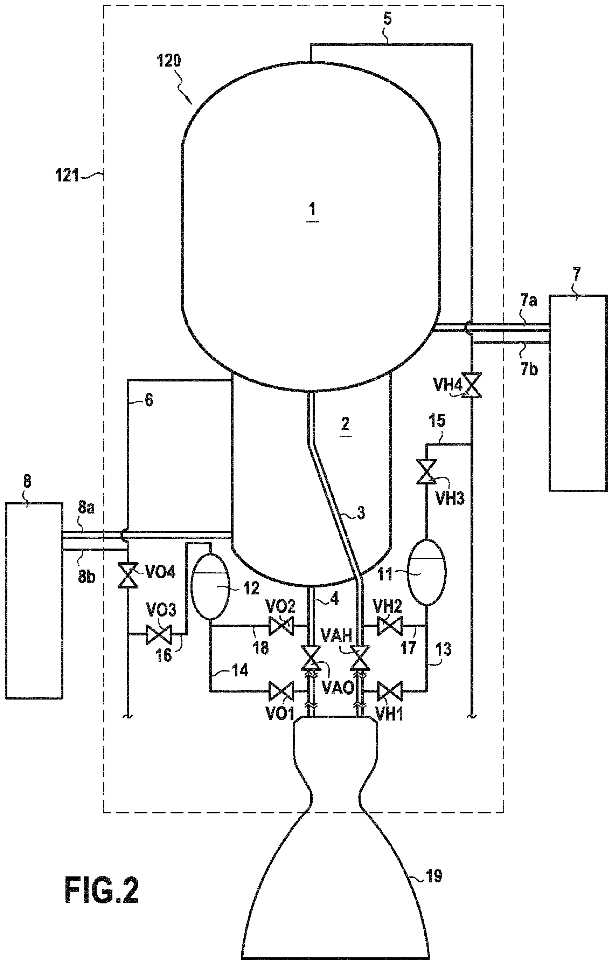

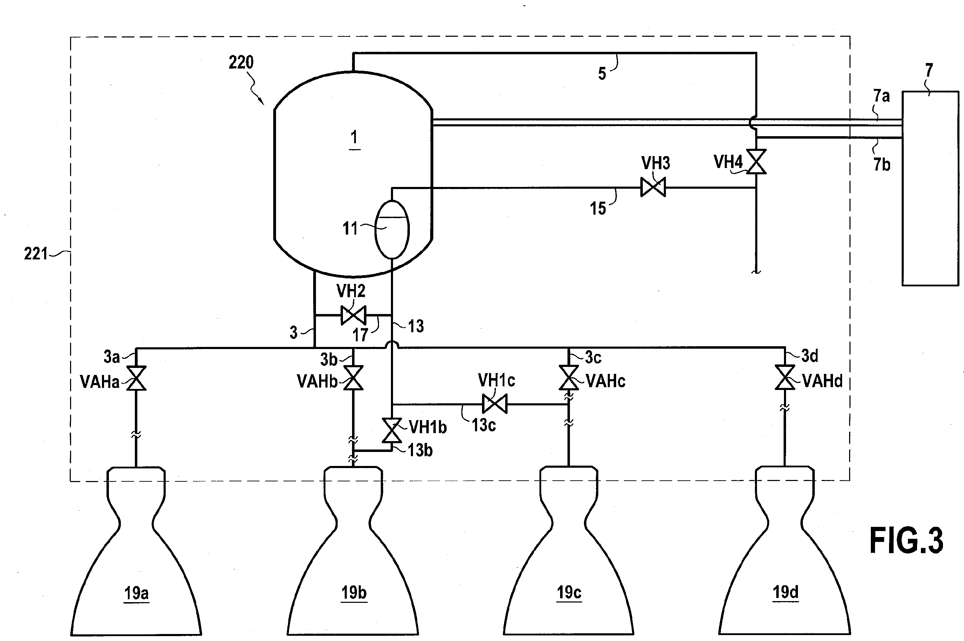

Les figures 2 et 3 présentent l'ensemble propulsif dans d'autres modes de réalisation. Dans ces figures, les éléments correspondant ou identiques à ceux du premier mode de réalisation recevront le même signe de référence et ne seront pas décrits à nouveau.

La figure 2 représente un ensemble propulsif 121 selon un deuxième mode de réalisation. L'ensemble propulsif 121 est identique à l'ensemble propulsif 21 du premier mode de réalisation à ceci près que les réservoirs auxiliaires 11, 12 sont situés respectivement à l'extérieur des réservoirs principaux correspondants 1, 2.

La figure 3 représente un ensemble propulsif 221 selon un troisième mode de réalisation. L'ensemble propulsif 221 comporte quatre chambres propulsives 19a, 19b, 19c, 19d, alimentées en ergol par un dispositif d'alimentation 220. Le nombre de chambres propulsives pourrait être quelconque. Pour des raisons de clarté, on n'a représenté sur la figure 3 l'alimentation des chambres propulsives 19a, 19b, 19c, 19d en un seul ergol contenu dans un seul réservoir principal 1, mais les chambres propulsives 19a, 19b, 19c, 19d peuvent être alimentées en plusieurs ergols, ainsi que cela a été décrit dans les précédents modes de réalisation.

Dans ce troisième mode de réalisation, la conduite d'alimentation principale 3 se divise en quatre sous-conduites d'alimentation principales 3a, 3b, 3c, 3d, chacune respectivement munie d'une vanne d'alimentation principale VAHa, VAHb, VAHc, VAHd et chacune alimentant respectivement une chambre propulsive 19a, 19b, 19c, 19d.

Le dispositif d'alimentation 220 comprend en outre le réservoir auxiliaire 11, duquel s'étend la conduite d'alimentation auxiliaire 13. La conduite d'alimentation auxiliaire 13 se divise en deux sous-conduites d'alimentation auxiliaires 13b, 13c, chacune respectivement munie d'une vanne d'alimentation auxiliaire VH1b, VH1c, et respectivement raccordées aux sous-conduites d'alimentations principales 3b, 3c en aval des vannes d'alimentation principales VAHb, VAHc. Ainsi, le réservoir auxiliaire 11 peut alimenter, par l'intermédiaire de la conduite d'alimentation auxiliaire 13 et des sous-conduites d'alimentation auxiliaires 13b, 13c, les deux chambres propulsives 19b, 19c. Dans d'autres modes de réalisation, le réservoir auxiliaire 11 pourrait alimenter tout ou partie des chambres propulsives.

Grâce aux vannes d'alimentation principales VAHb, VAHc et auxiliaires VH1b, VH1c, l'alimentation de chaque chambre propulsive 19b, 19c par le réservoir auxiliaire 11 peut être commandée indépendamment de celle des autres chambres propulsives. Le dispositif d'alimentation 220 peut donc avoir de nombreuses applications selon son utilisation, tout en conservant les avantages décrits à propos du premier mode de réalisation.

Dans les modes de réalisation décrits, on a présenté la régulation de la pression dans le réservoir principal d'hydrogène 1 à l'aide de la vanne de pressurisation principale VH4. Toutefois, la régulation de pression peut s'effectuer à l'aide d'une autre vanne (non-représentée), notamment une vanne placée sur une conduite de dérivation (non-représentée) reliée à la conduite de pressurisation principale 5 entre le réservoir principal d'hydrogène 1 et la vanne de pressurisation principale VH4. Une telle autre vanne peut par exemple faire partie du Système de Contrôle d'Attitude et de Roulis (SCAR) de l'ensemble propulsif. En outre, le SCAR peut être muni d'une ligne de purge permettant par exemple de vidanger et/ou de dégazer le réservoir principal d'hydrogène 1.

Bien que la présente invention ait été décrite en se référant à des exemples de réalisation spécifiques, des modifications peuvent être apportées à ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Dispositif d'alimentation (20) en ergol d'au moins une chambre propulsive de moteur-fusée (19), comprenant un réservoir principal d'ergol (1, 2), une conduite d'alimentation principale (3, 4) s'étendant depuis le réservoir principal (1, 2) pour alimenter la chambre propulsive (19), et sur laquelle est placée une vanne d'alimentation principale (VAH, VAO), le dispositif d'alimentation comprenant en outre un réservoir auxiliaire dudit ergol (11, 12) et une conduite d'alimentation auxiliaire (13, 14) munie d'une vanne d'alimentation auxiliaire (VH1, VO1), reliant le réservoir auxiliaire (11, 12) à la conduite d'alimentation principale (3, 4) en aval de la vanne d'alimentation principale (VAH, VAO), le dispositif d'alimentation étant **caractérisé en ce que** le réservoir auxiliaire (11, 12) est situé à l'intérieur du réservoir principal (1, 2).

2. Dispositif d'alimentation (20) selon la revendication 1, dans lequel le réservoir auxiliaire (11, 12) est connecté par une conduite de remplissage (17, 18) à la conduite d'alimentation principale (3, 4) en amont de la vanne d'alimentation principale (VAH, VAO), et la conduite de remplissage (17, 18) comporte une vanne de remplissage (VH2, VO2).

3. Dispositif d'alimentation (20) selon la revendication 1 ou 2, comprenant en outre une conduite de pressurisation du réservoir auxiliaire (15, 16) reliant le réservoir auxiliaire (11, 12) à une conduite de pressurisation principale (5, 6).

4. Dispositif d'alimentation selon l'une quelconque des revendications 1 à 3, dans lequel la capacité du réservoir auxiliaire (11, 12) est inférieure à la capacité du réservoir principal (1, 2).

5. Dispositif d'alimentation selon la revendication 4, dans lequel la capacité du réservoir auxiliaire (11, 12) est inférieure à 5 % de la capacité du réservoir principal (1, 2).

6. Dispositif d'alimentation (20) selon l'une quelconque des revendications 1 à 5 pour alimenter la chambre propulsive (19) en un ergol cryotechnique.

7. Ensemble propulsif (21) comprenant au moins une chambre propulsive de moteur-fusée (19) et un dispositif d'alimentation (20) selon l'une quelconque des revendications 1 à 6 pour alimenter en au moins un ergol cette chambre propulsive.

8. Procédé d'alimentation d'au moins une chambre propulsive de moteur-fusée (19) en au moins un ergol, **caractérisé en ce qu'**il comprend :
- la fermeture d'une vanne d'alimentation principale (VAH, VAO) pour arrêter la circulation d'ergol dans une conduite d'alimentation principale (3, 4) s'étendant depuis un réservoir principal d'ergol (1, 2) et vers la chambre propulsive (19) ;
- l'ouverture d'une vanne d'alimentation auxiliaire (VH1, VO1) pour permettre la circulation d'ergol depuis un réservoir auxiliaire (11, 12) situé à l'intérieur du réservoir principal (1, 2) vers la chambre propulsive (19), le réservoir auxiliaire (11, 12) étant connecté à la conduite d'alimentation principale (3, 4) en aval de la vanne d'alimentation principale (VAH, VAO) à travers une conduite d'alimentation d'auxiliaire (13, 14) munie de ladite vanne d'alimentation auxiliaire (VH1, VO1).

9. Procédé d'alimentation selon la revendication 8, comprenant en outre la pressurisation du réservoir auxiliaire (11, 12) avant et/ou après l'ouverture de la vanne d'alimentation auxiliaire (VH1, VO1).

## Patentansprüche

1. Vorrichtung (20) zur Zufuhr von Treibstoff zu mindestens einer Raketentriebwerkskammer (19), umfassend einen Haupttreibstofftank (1, 2), eine Hauptzufuhrleitung (3, 4), die sich von dem Haupttank (1, 2) aus erstreckt, um die Triebwerkskammer (19) zu versorgen, und auf der ein Hauptzufuhrventil (VAH, VAO) angeordnet ist, wobei die Zufuhrvorrichtung ferner einen Hilfstank für den Treibstoff (11, 12) und eine mit einem Hilfszufuhrventil (VH1, VO1) versehene Hilfszufuhrleitung (13, 14) umfasst, die den Hilfstank (11, 12) mit der Hauptzufuhrleitung (3, 4) stromabwärts des Hauptzufuhrventils (VAH, VAO) verbindet, wobei die Zufuhrvorrichtung **dadurch gekennzeichnet ist, dass** der Hilfstank (11, 12) innerhalb des Haupttanks (1, 2) angeordnet ist.

2. Zufuhrvorrichtung (20) nach Anspruch 1, wobei der Hilfstank (11, 12) über eine Füllleitung (17, 18) mit der Hauptzufuhrleitung (3, 4) stromaufwärts des Hauptzufuhrventils (VAH, VAO) verbunden ist, und die Füllleitung (17, 18) ein Füllventil (VH2, VO2) aufweist.

3. Zufuhrvorrichtung (20) nach Anspruch 1 oder 2, ferner umfassend eine Druckbeaufschlagungsleitung (15, 16) für den Hilfstank, die den Hilfstank (11, 12) mit einer Hauptdruckbeaufschlagungsleitung (5, 6) verbindet.

4. Zufuhrvorrichtung nach einem der Ansprüche 1 bis 3, wobei das Fassungsvermögen des Hilfstanks (11, 12) kleiner ist als das Fassungsvermögen des Haupttanks (1, 2).

5. Zufuhrvorrichtung nach Anspruch 4, wobei das Fassungsvermögen des Hilfstanks (11, 12) weniger als 5 % des Fassungsvermögens des Haupttanks (1,2) beträgt.

6. Zufuhrvorrichtung (20) nach einem der Ansprüche 1 bis 5 zum Zuführen eines kryogenen Treibstoffs zu der Triebwerkskammer (19).

7. Triebwerksanordnung (21), umfassend mindestens eine Raketentriebwerkskammer (19) und eine Zufuhrvorrichtung (20) nach einem der Ansprüche 1 bis 6 zum Zuführen von mindestens einem Treibstoff zu dieser Triebwerkskammer.

8. Verfahren zur Zufuhr von mindestens einem Treibstoff zu mindestens einer Raketentriebwerkskammer (19), **dadurch gekennzeichnet, dass** es umfasst:
- Schließen eines Hauptzufuhrventils (VAH, VAO), um den Fluss des Treibstoffs in einer Hauptzufuhrleitung (3, 4) zu stoppen, die sich von einem Haupttreibstofftank (1, 2) und zu der Triebwerkskammer (19) erstreckt,
- Öffnen eines Hilfszufuhrventils (VH1, VO1), um den Fluss des Treibstoffs von einem Hilfstank (11, 12), der sich innerhalb des Haupttanks (1, 2) befindet, zu der Triebwerkskammer (19) zu ermöglichen, wobei der Hilfstank (11, 12) mit der Hauptzufuhrleitung (3, 4) stromabwärts des Hauptzufuhrventils (VAH, VAO) durch eine Hilfszufuhrleitung (13, 14) verbunden ist, die mit dem Hilfszufuhrventil (VH1, VO1) versehen ist.

9. Zufuhrverfahren nach Anspruch 8, ferner umfassend die Druckbeaufschlagung des Hilfstanks (11, 12) vor und/oder nach dem Öffnen des Hilfszufuhrventils (VH1, VO1).

## Claims

1. A feed device (20) for feeding at least one rocket engine propulsion chamber (19) with propellant, the feed device comprising a main propellant tank (1, 2), a main feed pipe (3, 4) extending from the main tank (1, 2) to feed the propulsion chamber (19), and having a main feed valve (VAH, VAO) placed thereon, the feed device further comprising an auxiliary tank (11, 12) for said propellant and an auxiliary feed pipe (13, 14) provided with an auxiliary feed valve (VH1, VO1) connecting the auxiliary tank (11, 12) to the main feed pipe (3, 4) downstream from the main feed valve (VAH, VAO), the feed device being **characterized in that** the auxiliary tank (11, 12) is situated inside the main tank (1, 2).

2. A feed device (20) according to claim 1, wherein the auxiliary tank (11, 12) is connected by a filler pipe (17, 18) to the main feed pipe (3, 4) upstream from the main feed valve (VAH, VAO), and the filler pipe (17, 18) includes a filler valve (VH2, VO2).

3. A feed device (20) according to claim 1 or claim 2, further including a pressurizer pipe for pressurizing the auxiliary tank (15, 16) connecting the auxiliary tank (11, 12) to a main pressurizer pipe (5, 6).

4. A feed device according to any one of claims 1 to 3, wherein the capacity of the auxiliary tank (11, 12) is less than the capacity of the main tank (1, 2).

5. A feed device according to claim 4, wherein the capacity of the auxiliary tank (11, 12) is less than 5% of the capacity of the main tank (1, 2).

6. A feed device (20) according to any one of claims 1 to 5, for feeding the propulsion chamber (19) with a cryogenic propellant.

7. A propulsion assembly (21) comprising at least one rocket engine propulsion chamber (19) and a feed device (20) according to any one of claims 1 to 6 for feeding the propulsion chamber with at least one propellant.

8. A method of feeding at least one rocket engine propulsion chamber (19) with at least one propellant, the method being **characterized in that** it comprises:
. closing a main feed valve (VAH, VAO) to stop the flow of propellant in a main feed pipe (3, 4) extending from a main propellant tank (1, 2) to the propulsion chamber (19); and
. opening an auxiliary feed valve (VH1, VO1) for enabling propellant to flow from an auxiliary tank (11, 12) situated inside the main tank (1, 2) to the propulsion chamber (19), the auxiliary tank (11, 12) being connected to the main feed pipe (3, 4) downstream from the main feed valve (VAH, VAO) via an auxiliary feed pipe (13, 14) provided with said auxiliary feed valve (VH1, VO1).

9. A feed method according to claim 8, further including pressurizing the auxiliary tank (11, 12) before and/or after opening the auxiliary feed valve (VH1, VO1).
